# EUROPEAN PATENT SPECIFICATION

(11) **EP 1 251 039 B1**
(45) Date of publication and mention of the grant of the patent: **22.10.2008**
(21) Application number: 01303668.6
(22) Date of filing: 20.04.2001
(51) Int. Cl.: B60R 21/20

(54) **Airbag apparatus**
Airbagvorrichtung
Dispositif d'airbag

(43) Date of publication of application: 23.10.2002
(73) Proprietor: Sanko Gosei Kabushiki Kaisha, Nishi Tonami-gun, Toyama-ken (JP)
(72) Inventor: Yasuda, Mitsuo, Sanko Gosei Kabushiki Kaisha, NishiTonami-gun, Toyama-ken (JP)
(74) Representative: Stanley, David William

(56) References cited:
- EP-A- 0 428 935
- EP-A- 0 639 481
- EP-A- 0 748 722
- WO-A-99/46152
- GB-A- 2 347 120
- US-A- 6 039 342
- PATENT ABSTRACTS OF JAPAN vol. 2000, no. 01, 31 January 2000 (2000-01-31) & JP 11 291853 A (KANSEI CORP), 26 October 1999 (1999-10-26)
- PATENT ABSTRACTS OF JAPAN vol. 1998, no. 03, 27 February 1998 (1998-02-27) -& JP 09 301013 A (INOAC CORP), 25 November 1997 (1997-11-25)

## Description

This invention relates to airbag apparatus.

A known airbag apparatus for a front passenger seat of a vehicle, such as a car, basically includes an airbag, an airbag case for accommodating the folded airbag, and an inflator for inflating the airbag. The airbag apparatus is accommodated within an instrument panel in opposition to the front passenger seat.

The instrument panel cover includes a cover plate having a size corresponding to that of an opening portion of the airbag case as disclosed in Japanese Patent Application Laid-Open (kokai) No. 7-172256 or includes a lid plate as proposed by the inventors of the present invention in Japanese Patent (kokai) No. 11-198752. According to Japanese Patent Application Laid-Open (kokai) No. 11-198752, the lid plate is located in opposition to the opening portion of the airbag case and is formed integrally with the instrument panel cover. The main body of a lid reinforcement is fixedly attached to the lid plate from inside along a peripheral edge portion of the lid plate. A portion of the reinforcement which extends from a hinge portion of the reinforcement extending upward from the main body of the reinforcement is fixedly attached to the airbag case via a bracket. Upon inflation of the airbag, the cover plate or the lid plate is opened.

The thus-configured airbag apparatus for a front passenger seat functions in the following manner. Upon collision of the vehicle, an impact force caused by the collision is detected by a sensor. A control unit including a CPU judges whether or not the detected impact force is equal to or higher than a predetermined value. When the control unit judges that the impact force is not lower than the predetermined value, the control unit issues a signal for causing the inflator to generate a predetermined gas. The gas is fed to the airbag so as to promptly inflate the airbag.

The inflating airbag presses, from inside, a fracture-opening lid, such as the cover plate or the lid plate, of the instrument panel cover. The lid is fractured along a fracture line and detached from the instrument panel cover. The detached lid is opened outward while being turned inside out about the hinge portion of the lid reinforcement.

The inflating airbag projects outward from the instrument panel cover through the thus-formed opening in the instrument panel cover. Serving as a cushion, the inflated airbag supports a front seat passenger at his/her chest and head, thereby protecting the passenger from the impact force of collision.

Generally, a conventional instrument panel of a vehicle has a fracture-opening lid formed thereon in such a manner as to face the front passenger seat of the vehicle; i.e., the lid is formed on an inclined plane of the instrument panel which faces a front seat passenger. Upon inflation of the airbag, the fracture-opening lid is detached from the inclined plane. The detached lid is opened outward while being turned inside out about the hinge portion of the lid reinforcement. The inflating airbag projects outward from the instrument panel. An edge of the thus-detached lid may injure the front seat passenger. When the passenger is a child, detachment of the lid occurs in the vicinity of the face of the child, thus doubling the degree of danger.

In the accompanying diagrammatic drawings:

Figure 1 is a perspective view of an airbag apparatus for a front passenger seat that has been developed in order to prevent the above-mentioned danger; and

Figure 2 is a cross-sectional view of the airbag apparatus taken along line II-II of Figure 1.

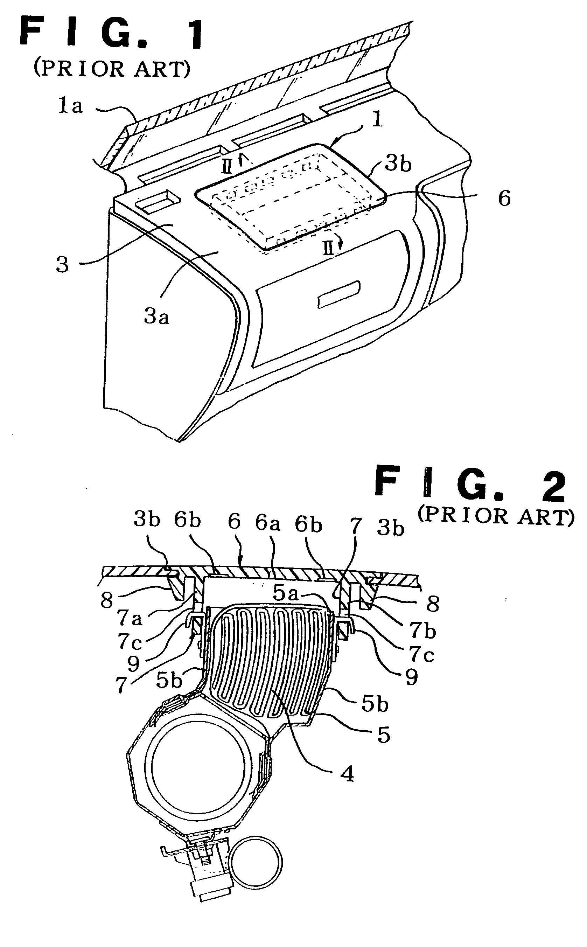

The airbag apparatus 1 shown in Figure 1 is disposed within an instrument panel such that an airbag 4 inflated by means of gas from an inflator projects from a substantially horizontal plane 3a of an instrument panel cover 3 located in the vicinity of a windshield 1a of a vehicle. The airbag apparatus 1 includes an airbag case 5 adapted to accommodate the folded airbag 4 and having an opening portion 5a formed in opposition to the back surface (under surface) of the instrument panel cover 3. A flexible fracture-opening lid 6 formed of a synthetic resin is disposed at an opening portion 3b formed on the instrument panel cover 3 in opposition to the opening portion 5a of the airbag case 5. Upon inflation of the airbag 4, the fracture-opening lid 6 is split open into two fracture pieces, which open apart in opposite directions toward the front and rear of the vehicle, respectively, through fracture along grooves 6a and 6b, which are formed along the centreline of and the periphery of the fracture-opening lid 6 and serve as fragile portions. The inflating airbag 4 projects outward through the thus-formed opening.

A mounting leg portion 7 and a plurality of engagement pieces 8 are integrally formed on the back surface of the fracture-opening lid 6. The mounting leg portion 7 assumes the form of a rectangular frame slightly greater in size than the opening portion 5a of the airbag case 5. The engagement pieces 8 are elastically engaged with the edge of the opening portion 3b of the instrument panel cover 3. A plurality of rectangular through-holes 7c are formed in a front wall 7a of and in a rear wall 7b of the mounting leg portion 7. When the fracture-opening lid 6 is fitted to the opening portion 3b of the instrument panel cover 3, the rectangular through-holes 7c are engaged with corresponding hooks 9 fixedly attached to a front wall 5b of and to a rear wall 5b of the opening portion 5a of the airbag case 5.

Upon inflation of the airbag 4, the fracture-opening lid 6 is split open into two fracture pieces, which open apart in opposite directions toward the front and rear of the vehicle, respectively, through fracture along the grooves 6a and 6b, which are formed along the centreline of and the periphery of the fracture-opening lid 6. Since the rectangular through-holes 7c formed in the front and rear walls 7a and 7c of the mounting leg portion 7 are engaged with the hooks 9 fixedly attached to the front and rear walls 5b of the opening portion 5a of the airbag case 5, scattering of the fracture pieces of the fracture-opening lid 6 is prevented.

According to the airbag apparatus for a front passenger seat as shown in Figure 1, the opening portion 3b is formed in the instrument panel cover 3 in such a manner as to face the opening portion 5a of the airbag case 5. The fracture-opening lid 6 is a discrete element different from the instrument panel cover 3 and made of a flexible resin material and is fitted into the opening portion 3b. Thus, the manufacture and the assembly work of the instrument panel cover 3 and the fracture-opening lid 6 are rather complicated. Also, the fracture-opening lid 6 easily deforms when an external force is applied thereto, thereby damaging the appearance or design of the instrument panel cover 3.

Also, the discrete fracture-opening lid 6 is not reinforced from behind. Since the fracture-opening lid 6 is made of a flexible material, upon inflation of the airbag 4, the leg portion 7 is likely to disengage from the hooks 9 fixedly attached to the front and rear walls 5b of the opening portion 5a of the airbag case 5, potentially involving scattering of fracture pieces of the fracture-opening lid 6.

Preferred embodiments of the present invention aim to solve the above-mentioned problems in a conventional airbag apparatus for a front passenger seat and to provide an airbag apparatus for a front passenger seat which can be manufactured and assembled easily, whose fracture-opening section can be fractured reliably upon inflation of an airbag while maintaining high safety, and which has an improved appearance.

EP 0 748 722 discloses an airbag apparatus for a front passenger seat and built into an instrument panel of a vehicle, the apparatus comprising an airbag case accommodated within a core of said instrument panel and having an opening portion located in opposition to a back surface of a cover of said instrument panel; and an airbag accommodated within said airbag case in a folded state, said airbag being able to be inflated by means of gas from an inflator. A fracture-opening section is defined in said cover to be located in opposition to the opening portion of said airbag case, said fracture-opening section having a fragile contour portion and a fragile splitting portion for dividing said fracture-opening section into a first subsection towards the front of the vehicle and a second subsection towards the rear of the vehicle. A reinforcement part comprising a hinge portion and a leg portion whose end is engaged with a hook fixedly attached to the opening portion of said airbag case. In such an apparatus, said fracture-opening section opens apart along the fragile splitting portion upon inflation of the airbag.

According to the present invention, there is provided such an airbag apparatus in which:
said fragile contour portion surrounds said fracture-opening section;
said reinforcement part comprises first and second reinforcements fixedly attached to back surfaces of said first and second subsections, each of said first and second reinforcements having a hinge portion and a leg portion whose end is engaged with a hook fixedly attached to the opening portion of said airbag case; and
said second subsection is smaller in area than said first subsection.

Preferably, the fragile splitting portion of said fracture-opening section extends in the lateral direction of the vehicle at a substantially central portion of said fracture-opening section in the front-back direction of the vehicle.

Preferably, the fragile splitting portion is biased toward the front passenger seat from the centre of said fracture-opening section in the front-back direction of the vehicle.

Preferably, the opening portion of said airbag case is disposed in the vicinity of said fracture-opening section such that said airbag accommodated within said airbag case reinforces the fragile contour and splitting portions of the fracture-opening section against an external force.

Preferably, protrusions are formed at facing end portions of said first and second reinforcements such that the protrusions of said first reinforcement and the protrusions of said second reinforcement are alternately arranged along the fragile splitting portion.

Preferably, lateral portions of the fragile contour portion each assume the form of a combination of convex curves or the form of a combination of convex curves and straight lines, such that the cover has a projecting portion in opposition to each of the opposite ends of the fragile splitting portion.

Preferably, said fracture-opening section is defined in a substantially horizontal portion of the cover of said instrument panel which is located in the vicinity of the windshield of the vehicle.

Preferably, said second subsection of said fracture-opening section is of such a size that, upon inflation of said airbag, the subsection does not project beyond said instrument panel toward the passenger seat.

Preferably, the fragile contour portion and the fragile splitting portion of said fracture-opening section are formed such that a laser beam is applied to the cover of said instrument panel from behind while being moved relatively along the fragile contour portion and the fragile splitting portion.

Preferred embodiments of the invention may therefore facilitate manufacture, allow the fracture-opening section to be reliably fractured along the contour portion and the splitting portion while maintaining high safety, and impart favourable appearance or design to the instrument panel.

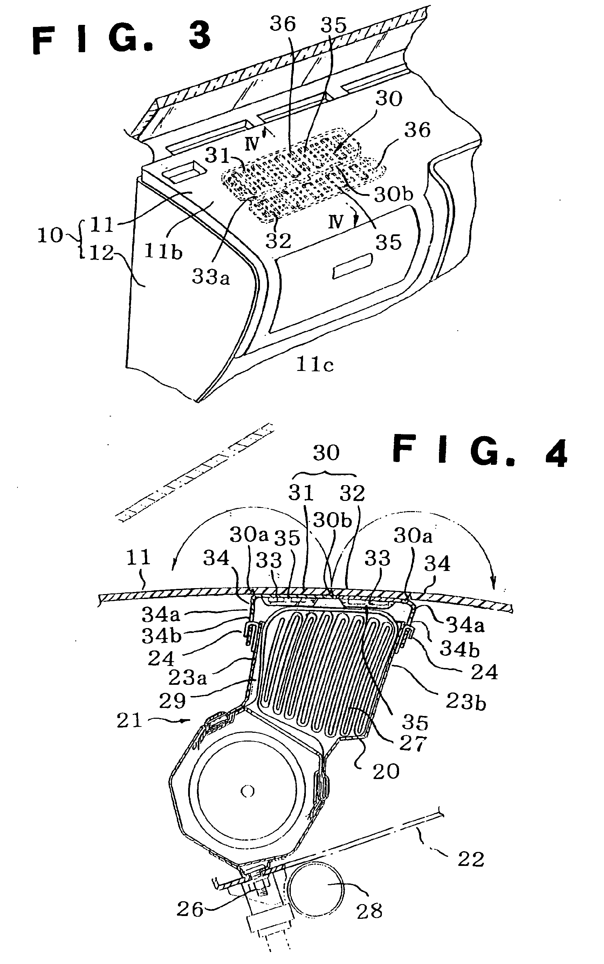

For a better understanding of the invention, and to show how embodiments of the same may be carried into effect, reference will now be made, by way of example, to Figures 3 to 8 of the accompanying diagrammatic drawings, in which:
Figure 3 is a perspective view of a main portion of an instrument panel cover equipped with an airbag apparatus for a front passenger seat according to on example of an embodiment of the present invention;
Figure 4 is a vertical sectional view of the airbag apparatus taken along line IV-IV of Figure 3;

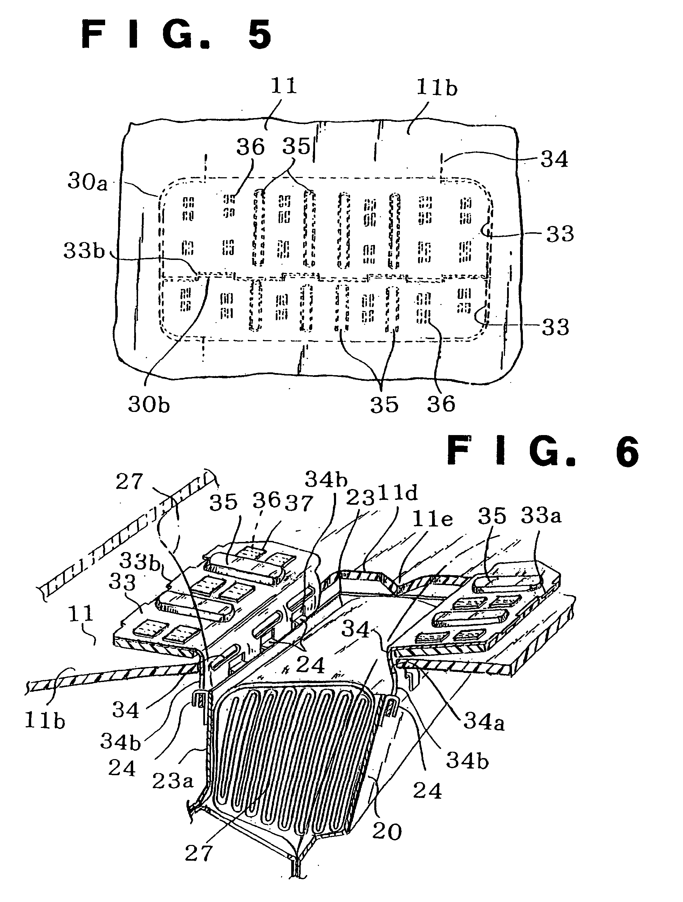

Figure 5 is a partial plan view of an instrument panel cover including a fracture-opening section;
Figure 6 is a perspective view of a main portion of the airbag apparatus, showing reinforcements as observed upon initiation of the airbag apparatus;

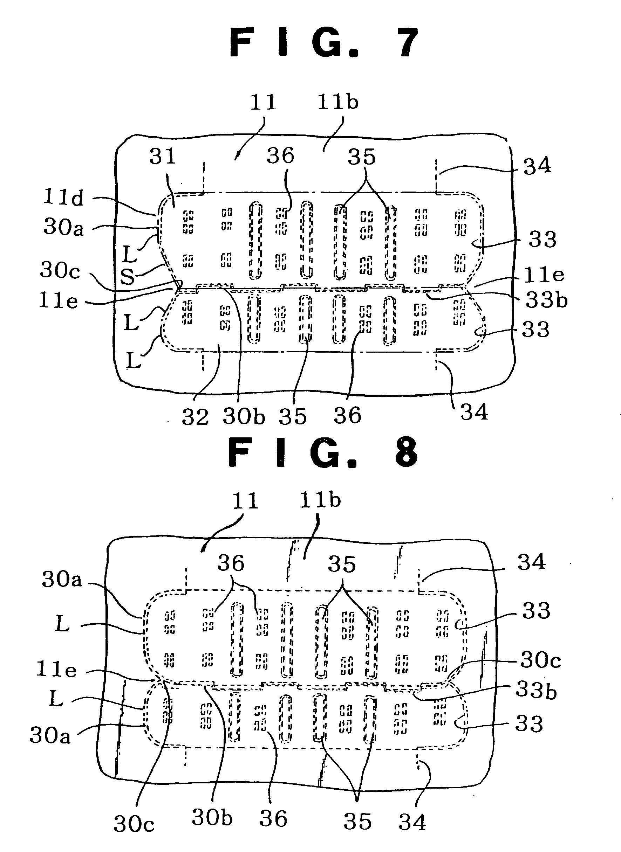

Figure 7 is a partial plan view of an instrument panel cover showing a modified example of the fracture-opening section; and
Figure 8 is a partial plan view of an instrument panel cover showing another modified example of the fracture-opening section.

In the figures, like reference numerals denote like or corresponding parts.

In the present specification, the terms "front" and "rear" correspond to the front and rear, respectively, of a vehicle, and the terms "right" and "left" correspond to the right-hand and left-hand sides, respectively, of the vehicle.

As shown in Figures 3 and 4, an instrument panel 10 includes an instrument panel core 12 and an instrument panel cover 11, which covers the instrument panel core 12. The instrument panel core 12 and the instrument panel cover 11 are each moulded from a synthetic resin, such as polypropylene. The instrument panel cover 11 is fixedly attached, by appropriate means, such as tapping screws, to the instrument panel core 12, which, in turn, is fixedly attached to a frame (not shown) of a vehicle.

As shown in Figure 4, an accommodation section 21 for accommodating a metallic airbag case 20 is defined by means of a partition 22 behind the instrument panel cover 11 and located in opposition to a front seat passenger seat. The present embodiment is applied to a right-hand drive. A left-hand drive employs a mirror image of the configuration of the present embodiment.

The partition 22 is removably attached to the instrument panel cover 11 using a plurality of tapping screws in order to facilitate the attachment of the airbag case 20 and other elements to the instrument panel cover 11.

A fracture-opening section 30, which is split open upon inflation of an airbag, is formed on the instrument panel cover 11 in opposition to the accommodation section 21. The fracture-opening section 30 assumes a substantially rectangular shape and an area substantially equal to that of an opening portion 23 of the airbag case 20. The fracture-opening section 30 can be split into two pieces along a splitting portion 30b, which includes fragile portions formed through laser processing, which will be described later.

The airbag case 20 is accommodated within the accommodation section 21 in the following manner. As shown in Figure 4, a plurality of hooks 24 are fixedly attached in a row to front and rear walls 23a and 23b of the opening portion 23 of the airbag case 20. Each of the hooks 24 is bent outward at an upper end portion. A pair of reinforcements 33 are fixedly attached, at respective end portions, to the back surface of the fracture-opening section 30 through thermal bonding or like processing. The reinforcements 33 each include a hinge portion 34 and a leg portion 34a extending downward from the hinge portion 34; i.e., extending away from the fixedly attached end portion. A plurality of slots 34b are formed in the leg portion 34a of each reinforcement 33 in such a manner as to extend therethrough in the front-rear direction. The hooks 24 are engaged with the corresponding slots 34b through utilization of the elasticity of the leg portions 34a. A lower end portion of the airbag case 20 is fixedly attached to the partition 22 by means of bolts and nuts 26.

An airbag 27 is accommodated in a folded condition within the airbag case 20. The airbag 27 is connected to an inflator (not shown) disposed outside the partition 22, by means of a gas feed pipe 28.

An airbag protection cover 29 made of thin cloth of synthetic fibre closes the opening portion 23 of the airbag case 20. The airbag protection cover 29 is adapted to prevent the folded airbag 27 from coming out from the airbag case 20 and breaks easily upon inflation of the airbag 27.

Assuming a size corresponding to that of the opening portion 23 of the airbag case 20 of the instrument panel cover 11, the fracture-opening section 30 includes a splitting portion 30b, which extends in the right-and-left direction at a substantially central portion while dividing the fracture-opening section 30 into a front subsection 31 and a rear subsection 32.

The splitting portion 30b is biased toward the front passenger seat such that, between the two subsections 31 and 32 of the fracture-opening section 30, the subsection 32 located on the side of the front passenger seat of the vehicle is slightly smaller in area than the other subsection 31 located on the side of the windshield of the vehicle.

A contour portion 30a of and the splitting portion 30b of the fracture-opening section 30 include fragile portions formed by means of a laser (not shown). Specifically, a pulsating laser beam is applied from behind the instrument panel cover 11 while being moved relatively along the contour portion 30a and the splitting portion 30b to thereby form the fragile portions. The two reinforcements 33 are fixedly attached to the back surfaces of the subsections 31 and 32 of the fracture-opening section 30 through thermal bonding or like processing. Upon inflation of the airbag 27, the fracture-opening portion 30 is split open such that the subsections 31 and 32 are turned inside out about the hinge portions of the reinforcements 33 in opposite directions.

As shown in Figure 6, one reinforcement 33 assumes a substantially rectangular shape corresponding to that of the subsection 31 of the fracture-opening section 30, while the other reinforcement 33 assumes a substantially rectangular shape corresponding to that of the subsection 32 of the fracture-opening section 30. The reinforcements 33 each include the hinge portion 34 extending in the longitudinal direction and the leg portion 34a extending downward from the hinge portion 34. The leg portion 34a has the slots 34b formed therein in such a manner as to extend therethrough in the front-rear direction and to be arranged in a row in the longitudinal direction. The slots 34b are engaged with the plurality of hooks 24 fixedly attached at constant intervals to the front and rear walls 23a and 23b of the airbag case 20. The slots 34b and the hooks 24 are engaged such that a gap of 4 mm to 7 mm is formed between the hook 24 and the bottom of the slot 34b.

A plurality of depressions 35 are formed, for reinforcement purpose, on each of the reinforcements 33 in such a manner as to extend in the short-side direction of the reinforcement 33 and to be arranged at certain intervals in the long-side direction of the reinforcement 33. Blocks of coupling holes 36 are formed on each of the reinforcements 33 while being arranged in the short-side and long-side directions of the reinforcement 33. Each block includes a plurality of coupling holes 36 extending in the short-side direction of the reinforcement 33 and arranged close to one another in the short-side and long-side directions of the reinforcement 33.

Protrusions 33a and 33b are respectively formed at the facing end portions of the reinforcements 33 such that the protrusions 33a and 33b are alternately arranged along the splitting portion 30b of the fracture-opening section 30.

The upper end of the opening portion 23 of the airbag case 20 is located in the vicinity of the back surface of the fracture-opening section 30 such that the airbag 27 accommodated within the airbag case 20 abuts the fragile portions of the contour portion 30a and the fragile portions of the splitting portion 30b via the reinforcements 33 to thereby reinforce the fragile portions against an external force to be potentially applied to the instrument panel cover 11, on which the fragile portions are formed.

A plurality of elongated protrusions 37 are formed on the inner surfaces of the subsections 31 and 32 of the fracture-opening section 30 in such a manner as to be aligned with the coupling holes 36 formed on the reinforcements 33. The elongated protrusions 37 are engaged with the corresponding coupling holes 36, and the tip ends of the protrusions 37 are melted through application of heat, such that the tip ends are flattened. Thus, the reinforcements 33 are fixedly attached to the corresponding front and rear subsections 31 and 32.

Next will be described a method for forming the fracture-opening section 30 on the instrument panel cover 11 located in opposition to the accommodation section 21.

The contour portion 30a and the splitting portion 30b of the fracture-opening section 30, which is split open upon inflation of the airbag 27, are formed on the instrument panel cover 11 by means of a laser. Specifically, a pulsating laser beam (output: 3 kW to 5 kW) of a predetermined frequency (e.g., 7 kHz) from a laser is applied to the instrument panel cover 11 from behind while being moved relatively at a predetermined speed along the outline edge of the reinforcement 33 fixedly attached to the back surface of the instrument panel cover 11. Thus, groove-like fragile portions are formed on the instrument panel cover 11 according to the relative speed of movement of and the pulsation pattern of a laser beam emitted from the laser.

As mentioned above, grooves serving as fragile portions are formed on the instrument panel cover 11 at a certain pattern along the entire outline edge of the reinforcement 33. The thus-formed fragile portions define the contour portion 30a and the splitting portion 30b, along which the fracture-opening section 30 fractures upon inflation of the airbag 27.

Preferably, the subsection 32 of the fracture-opening section 30, which is located on the side of the front passenger seat of a vehicle, assumes such a size as not to project beyond the instrument panel cover 11 toward the passenger seat upon inflation of the airbag 27.

The thus-configured airbag apparatus for a front passenger seat according to the present embodiment of the present invention functions in the following manner. Upon collision of the vehicle, an impact force caused by the collision is detected by a sensor. A control unit including a CPU judges whether or not the detected impact force is equal to or higher than a predetermined value. When the control unit judges that the impact force is not lower than the predetermined value, the control unit issues a signal for causing the inflator to generate a predetermined gas. The gas is fed to the airbag 27 so as to promptly inflate the airbag 27.

The inflating airbag 27 presses, from inside, the fracture-opening section 30 of the instrument panel cover 11. As a result, as shown in Figure 6, the front and rear subsections 31 and 32 of the fracture-opening section 30 are fractured along the contour portion 30a and the splitting portion 30b and detached from the instrument panel cover 11. The detached front and rear subsections 31 and 32 are opened outward while being turned inside out about the hinge portions 34 of the reinforcements 33. Since the slots 34b formed in the leg portions 34a of the reinforcements 33 are engaged with the hooks 24 of the airbag case 20, scattering of the subsections 31 and 32 is prevented.

The inflating airbag 27 projects outward from the instrument panel cover 11 through the thus-formed opening in the instrument panel cover 11. Serving as a cushion, the inflated airbag 27 supports a front seat passenger at his/her chest and head, thereby protecting the passenger from the impact force of collision.

According to the thus-configured airbag apparatus for a front passenger seat, the fracture-opening section 30 is formed on the back surface of the instrument panel cover 11 such that the fracture-opening section 30 can be fractured along the contour portion 30a and the splitting portion 30b composed of fragile portions, which are formed through laser processing. Thus, the fracture-opening portion 30 is invisible on the surface of a substantially horizontal plane 11b of the instrument panel cover 11, thereby enhancing the design of the instrument panel cover 11 and enabling reliable, prompt fracture of the fracture-opening section 30 upon inflation of the airbag 27.

The above embodiment is described while mentioning the right-hand and left-hand contour portions 30a of the fracture-opening portion 30 which are formed straight on the back surface of the instrument panel cover 11. However, the present invention is not limited thereto. For example, as shown in Figures 7 and 8, the right-hand and left-hand contour portions 30a, including fragile portions, of the front and rear subsections 31 and 32 of the fracture-opening section 30 each assume the form of a combination of convex curves L terminating at an end 30c of the splitting portion 30b or the form of a combination of a convex curve L and a straight line S terminating at the end 30c of the splitting portion 30b, such that the opening portion 11d of the panel cover 11 has a projecting portion 11e in opposition to the end 30c of the splitting portion 30b, and the splitting portion 30b is located in a manner biased toward the front passenger seat of the vehicle. Through impartment of the above form to the right-hand and left-hand contour portions 30a, sharp edges to be potentially formed on the peripheral corners of the front and rear subsections 31 and 32 of the fracture-opening section 30 can be reduced.

According to the above embodiment, the fragile portions formed at the contour portion 30a of and at the splitting portion 30b of the fracture-opening section 30 are formed such that a laser beam is applied to the instrument panel cover 11 from behind while being moved relatively along the contour portion 30a and the splitting portion 30b. However, the present invention is not limited thereto. For example, grooves which serve as the fragile portions may be formed on the back surface of the instrument panel cover 11 by means of a mould.

In preferred airbag apparatus of the present invention, the subsections of the fracture-opening section into which the fracture-opening section is split upon inflation of the airbag are reliably connected to the airbag case by means of the corresponding reinforcements. Therefore, the subsections do not scatter off.

Moreover, since the fracture-opening section is formed on a substantially horizontal portion of the instrument panel cover located in the vicinity of the windshield, upon inflation of the airbag, subsections of the fracture-opening section do not reach a front seat passenger, to thereby prevent potential injury to the passenger by an edge of a subsection. When the passenger is a child, the fracture-opening section fractures sufficiently away from the face of the child, thereby avoiding endangering the child.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. An airbag apparatus for a front passenger seat and built into an instrument panel (10) of a vehicle, the apparatus comprising:
an airbag case (20) accommodated within a core of said instrument panel (10) and having an opening portion (23) located in opposition to a back surface of a cover (11) of said instrument panel (10);
an airbag (27) accommodated within said airbag case (20) in a folded state, said airbag (27) being able to be inflated by means of gas from an inflator;
a fracture-opening section (30) defined in said cover (11) to be located in opposition to the opening portion (23) of said airbag case (20), said fracture-opening section (30) having a fragile contour portion (30a) and a fragile splitting portion (30b) for dividing said fracture-opening section (30) into a first subsection (31) towards the front of the vehicle and a second subsection (32) towards the rear of the vehicle; and
a reinforcement part (33) comprising a hinge portion (34) and a leg portion (34a) whose end is engaged with a hook fixedly attached to the opening portion (23) of said airbag case (20):
whereby said fracture-opening section (30) opens apart along the fragile splitting portion (30b) upon inflation of the airbag (27):
**characterised in that:**
said fragile contour portion (30a) surrounds said fracture-opening section (30);
said reinforcement part (33) comprises first and second reinforcements (33) fixedly attached to back surfaces of said first and second subsections (31,32), each of said first and second reinforcements (33) having a hinge portion (34) and a leg portion (34a) whose end is engaged with a hook fixedly attached to the opening portion (23) of said airbag case (20); and said second subsection (32) is smaller in area than said first subsection (31).

2. An airbag apparatus according to Claim 1, wherein the opening portion (23) of said airbag case (20) is disposed in the vicinity of said fracture-opening section (30) such that said airbag (27) accommodated within said airbag case (20) reinforces the fragile contour and splitting portions (30a, 30b) of the fracture-opening section (30) against an external force.

3. An airbag apparatus according to Claim 1 or 2, wherein protrusions (33a, 33b) are formed at facing end portions of said first and second reinforcements (33) such that the protrusions (33a) of said first reinforcement and the protrusions (33b) of said second reinforcement are alternately arranged along the fragile splitting portion (30b).

4. An airbag apparatus according to Claim 1, 2 or 3, wherein lateral portions of the fragile contour portion (30a) each assume the form of a combination of convex curves (L) or the form of a combination of convex curves (L) and straight lines (S), such that the cover (11) has a projecting portion (11e) in opposition to each of the opposite ends (30c) of the fragile splitting portion (30b).

5. An airbag apparatus according to any of the preceding claims, wherein said fracture-opening section (30) is defined in a substantially horizontal portion of the cover (11) of said instrument panel (10) which is located in the vicinity of the windshield of the vehicle.

6. An airbag apparatus according to Claim 5, wherein said second subsection (32) of said fracture-opening section (30) is of such a size that, upon inflation of said airbag (27), the subsection does not project beyond said instrument panel (10) toward the passenger seat.

7. An airbag apparatus according to any of the preceding claims, wherein the fragile contour portion (30a) and the fragile splitting portion (30b) of said fracture-opening section (30) are formed such that a laser beam is applied to the cover (11) of said instrument panel (10) from behind while being moved relatively along the fragile contour portion (30a) and the fragile splitting portion (30b).

## Patentansprüche

1. Airbagvorrichtung für einen vorderen Fahrgastsitz und in eine Instrumententafel (10) eines Fahrzeugs eingebaut, wobei die Vorrichtung Folgendes umfasst:
ein Airbaggehäuse (20), das innerhalb eines Kerns der Instrumententafel (10) untergebracht ist und einen Öffnungsteil (23) aufweist, der einer rückseitigen Fläche einer Abdeckung (11) der Instrumententafel (10) gegenüberliegend angeordnet ist;
einen Airbag (27), der in einem gefalteten Zustand innerhalb des Airbaggehäuses (20) untergebracht ist, wobei der Airbag (27) mittels Gas von einem Gasgenerator aufgeblasen werden kann;
einen Bruchöffnungsabschnitt (30), der in der Abdeckung (11) ausgebildet ist, um dem Öffnungsteil (23) des Airbaggehäuses (20) gegenüberliegend angeordnet zu sein, wobei der Bruchöffnungsabschnitt (30) einen zerbrechlichen Konturteil (30a) und einen zerbrechlichen Zerlegungsteil (30b) zum Unterteilen des Bruchöffnungsabschnitts (30) in einen dem vorderen Teil des Fahrzeugs zugewandten ersten Teilabschnitt (31) und einen dem hinteren Teil des Fahrzeugs zugewandten zweiten Teilabschnitt (32) aufweist; und
einen Verstärkungsteil (33), welcher einen Gelenkteil (34) und einen Fußteil (34a) umfasst, in dessen Ende ein fest an dem Öffnungsteil (23) des Airbaggehäuses (20) befestigter Haken eingreift;
wodurch sich der Bruchöffnungsabschnitt (30) beim Aufblasen des Airbags (27) entlang dem zerbrechlichen Zerlegungsteil (30b) auseinander öffnet:
**dadurch gekennzeichnet, dass:**
der zerbrechliche Konturteil (30a) den Bruchöffnungsabschnitt (30) umgibt;
der Verstärkungsteil (33) eine erste und eine zweite Verstärkung (33) umfasst, welche fest an rückseitigen Flächen des ersten und des zweiten Teilabschnitts (31, 32) befestigt sind, wobei die erste und die zweite Verstärkung (33) je ein Gelenkteil (34) und einen Fußteil (34a) umfassen, in dessen Ende ein fest an dem Öffnungsteil (23) des Airbaggehäuses (20) befestigter Haken eingreift; und
der zweite Teilabschnitt (32) einen kleineren Flächeninhalt als der erste Teilabschnitt (31) aufweist.

2. Airbagvorrichtung nach Anspruch 1, wobei der Öffnungsteil (23) des Airbaggehäuses (20) nahe dem Bruchöffnungsabschnitt (30) angeordnet ist, so dass der innerhalb des Airbaggehäuses (20) untergebrachte Airbag (27) den zerbrechlichen Konturteil und Zerlegungsteil (30a, 30b) des Bruchöffnungsabschnitts (30) gegen eine äußere Kraft verstärkt.

3. Airbagvorrichtung nach Anspruch 1 oder 2, wobei Vorsprünge (33a, 33b) an einander gegenüberliegenden Endabschnitten der ersten und zweiten Verstärkung (33) gebildet sind, so dass die Vorsprünge (33a) der ersten Verstärkung und die Vorsprünge (33b) der zweiten Verstärkung alternierend entlang dem zerbrechlichen Zerlegungsteil (30b) angeordnet sind.

4. Airbagvorrichtung nach Anspruch 1, 2 oder 3, wobei seitliche Abschnitte des zerbrechlichen Konturteils (30a) jeweils die Form einer Kombination konvexer Kurven (L) oder die Form einer Kombination konvexer Kurven (L) und gerader Linien (S) annehmen, so dass die Abdeckung (11) einen herausragenden Abschnitt (11 e) gegenüber jedem der gegenüberliegenden Enden (30c) des zerbrechlichen Zerlegungsteils (30b) aufweist.

5. Airbagvorrichtung nach einem beliebigen der vorangehenden Ansprüche, wobei der Bruchöffnungsabschnitt (30) in einem im Wesentlichen horizontalen Abschnitt der Abdeckung (11) der Instrumententafel (10) gebildet ist, welcher sich nahe der Windschutzscheibe des Fahrzeugs befindet.

6. Airbagvorrichtung nach Anspruch 5, wobei der zweite Teilabschnitt (32) des Bruchöffnungsabschnitts (30) eine derartige Größe aufweist, dass der Teilabschnitt beim Aufblasen des Airbags (27) nicht über die Instrumententafel (10) in Richtung auf den Fahrgastsitz hinausragt.

7. Airbagvorrichtung nach einem beliebigen der vorangehenden Ansprüche, wobei der zerbrechliche Konturteil (30a) und der zerbrechliche Zerlegungsteil (30b) des Bruchöffnungsabschnitts (30) derart ausgebildet sind, dass ein Laserstrahl von hinten auf die Abdeckung (11) der Instrumententafel (10) gerichtet wird, während er relativ entlang dem zerbrechlichen Konturteil (30a) und dem zerbrechlichen Zerlegungsteil (30b) bewegt wird.

## Revendications

1. Coussin gonflable (airbag) pour un siège avant de passager et prenant place dans un tableau de bord (10) d'un véhicule, le coussin gonflable comprenant :
- un logement ou boitier de coussin gonflable (20) situé à l'intérieur du corps dudit tableau de bord (10) et ayant une partie d'ouverture (23) située à l'opposé de la face arrière d'un couvercle (11) dudit tableau de bord (10) ;
- un coussin gonflable (27) logé à l'intérieur dudit logement de coussin gonflable (20) dans un état plié, ledit coussin gonflable (27) étant apte à être gonflé au moyen de gaz par un gonfleur;
- une section de rupture d'ouverture (30) définie dans ledit couvercle (11) située à l'opposé de la partie d'ouverture (23) dudit logement de coussin gonflable (20), ladite section de rupture d'ouverture (30) ayant une portion de contour fragile (30a) et une portion de séparation fragile (30b) pour diviser ladite section de rupture d'ouverture (30) en une première sous-section (31) vers l'avant du véhicule et une seconde sous-section (32) vers l'arrière du véhicule; et
- une partie renforcée (33) comprenant une partie charnière (34) et une partie tige (34a) dont l'extrémité est engagée avec un crochet attaché fixement à la partie d'ouverture (23) dudit logement de coussin gonflable (20) :
tandis que ladite section de rupture d'ouverture (30) s'ouvre vers l'extérieur le long de la portion de séparation fragile (30b) lors du gonflement du coussin gonflable (27) :
**caractérisé en ce que** :
ladite portion de contour fragile (30a) entoure ladite section de rupture d'ouverture (30) ;
ladite partie renforcée (33) comprend un premier et un second renforcements (33) attachés fixement aux surfaces arrières desdites première et seconde sous-sections (31,32), chacun desdits premier et second renforcements (33) ayant une partie charnière (34) et une partie tige (34a) dont l'extrémité est engagée avec un crochet attaché fixement à la partie d'ouverture (23) dudit logement de coussin gonflable (20) ; et
ladite seconde sous-section (32) est plus petite en surface que ladite première sous-section (31).

2. Coussin gonflable selon la revendication 1, **caractérisé en ce que** la partie d'ouverture (23) dudit logement de coussin gonflable (20) est disposée à proximité de ladite section de rupture d'ouverture (30) de manière que ledit coussin gonflable (27) logé à l'intérieur dudit logement de cousin gonflable (20) renforce les portions du contour et de séparation fragiles (30a, 30b) de la section de rupture d'ouverture (30), à l'encontre d'une force externe.

3. Coussin gonflable selon les revendications 1 ou 2, **caractérisé en ce que** des saillies (33a, 33b) sont formées à l'extrémité distale des portions desdits premier et second renforcements (33) de manière que les saillies (33a) dudit premier renforcement et les saillies (33b) dudit second renforcement sont disposées alternativement le long de la portion de séparation fragile (30b).

4. Coussin gonflable selon les revendications 1, 2 ou 3, **caractérisé en ce que** les portions latérales de la portion de contour fragile (30a) présentent chacune la forme d'une combinaison de courbes convexes (L) ou la forme d'une combinaison de courbes convexes (L) et de lignes droites (S), de manière que le couvercle (11) présente une partie en saillie (11 e) à l'opposé de chaque extrémité opposée (30c) de la portion de séparation fragile (30b).

5. Coussin gonflable selon l'une quelconque des revendications précédentes, **caractérisé en ce que** ladite section de rupture d'ouverture (30) est définie dans une portion sensiblement horizontale du couvercle (11) dudit tableau de bord (10) qui est située à proximité du pare-brise du véhicule.

6. Coussin gonflable selon la revendication 5, **caractérisé en ce que** ladite seconde sous-section (32) de ladite section de rupture d'ouverture (30) est d'une taille telle que, lors du gonflement dudit coussin gonflable (27), la sous-section ne dépasse pas dudit tableau de bord (10) vers le siège passager.

7. Coussin gonflable selon l'une quelconque des revendications précédentes, **caractérisé en ce que** la portion de contour fragile (30a) et la portion de séparation fragile (30b) de ladite section de rupture d'ouverture (30) sont formées de manière qu'un faisceau laser est appliqué au couvercle (11) dudit tableau de bord (10) par l'arrière, tout en étant déplacé relativement le long de la portion de contour fragile (30a) et de la portion de séparation fragile (30b).
